# EUROPÄISCHE PATENTANMELDUNG

(11) **EP 1 077 562 A1**
(43) Veröffentlichungstag der Anmeldung: **21.02.2001**
(21) Anmeldenummer: 99116229.8
(22) Anmeldetag: 17.08.1999
(51) Int. Cl.: H04L 29/06, H04L 7/04

(54) **Verfahren zur Synchronisierung von Datenpaketen variabler Länge in einem bit-orientierten Kanal**

(71) Anmelder: SIEMENS AKTIENGESELLSCHAFT, 80333 München (DE)
(72) Erfinder: Graf, Jürgen, Dipl.-Ing., 82065 Baierbrunn (DE); Charzinski, Joachim, Dipl.-Ing., 85764 Oberschleissheim (DE)

(57) **Zusammenfassung**

Die Verarbeitung von Datenpaketen variabler Länge (z.B. IP-Pakete), die mit konstanter Bitrate übertragen werden, erfordert, daß Byte- und Paketgrenzen sicher erkannt werden. Die Erfindung löst dieses Problem, indem jedem Datenpaket sendeseitig eine Synchronisationsinformation, eine Information bezüglich der Länge des Datenpaketes und eine über die Länge gebildete Prüfinformation vorangestellt wird, und empfangsseitig bei Auffinden der Synchronisationsinformation ein Suchverfahren mit Hilfe der Längen - und Prüfinformation gestartet wird, bis die Paketgrenze gefunden ist.

## Beschreibung

Die Erfindung betrifft ein Verfahren gemäß dem Oberbegriff von Patentanspruch 1.

Werden byte-orientierte Datenpakete mit variabler Länge über einen binären, bit-orientierten Kanal mit konstanter Bitrate übertragen, so müssen Byte- und Paketgrenzen sicher erkannt werden. Dadurch wird eine weitere Verarbeitung der Datenpakete erst möglich. Unter einem bit-orientierten Kanal wird dabei die Übertragung der Datenpakete ohne eine übergeordnete Rahmenstruktur verstanden. Da die eintreffenden Datenpakete - wie z.B. IP-Pakete - variable Länge aufweisen, kann ohne besondere Maßnahmen empfangsseitig lediglich das Eintreffen einzelner Bits erkannt werden. Eine Zuordnung einzelner Bits zu Bytes oder einzelne Datenpaketen ist nicht möglich.

Beim Stand der Technik haben sich zur Lösung dieses Problems insbesondere zwei Verfahren herauskristallisiert:

In dem ersten bekannten Verfahren gemäß des Standes der Technik werden die Paketgrenzen durch sonst nicht vorkommende Start- und Stop- Synchronisationssequenzen erkannt. Dies bedeutet, daß sendeseitig eine festgelegte Bitfolge (z.B. 01111110) an den Anfang und das Ende eines jeden Datenpakets gestellt wird, womit ein Blockbegrenzungsfeld definiert ist. Kommt diese Bitfolge innerhalb des Datenpakets vor, so muß sie durch eine längere Sequenz ersetzt werden, die sich empfangsseitig erkennen und wieder zurückverwandeln läßt. Beispielhaft hierzu sei das bekannte HDLC-Protokoll erwähnt.

Für die Synchronisation des Datenpaketes wird die Sequenz des Blockbegrenzungsfeldes ausgewertet. Damit alle Bitmuster übertragen werden können, ist ein Biteinfügemechanismus (Bitstopfen) definiert. Dies bedeutet, daß immer dann, wenn fünf aufeinanderfolgende Bits übertragen werden, sendeseitig eine Null eingefügt wird. Zwischen den gesendeten Blockbegrenzungen kann daher im fehlerfreien Fall das Blockbegrenzungszeichen nicht mehr vorkommen. Der Empfänger entfernt dieses Stopfbit wieder und stellt den ursprünglichen Zustand wieder her.

Nachteilig an diesem bekannten Verfahren ist der Umstand, daß aufgrund dieses Biteinfügemechanismuses die Dynamik des Übertragungsvorganges beeinträchtigt wird.

In dem zweiten bekannten Verfahren gemäß des Standes der Technik erfolgt die Erkennung der Paketgrenze durch eine Paketlängenangabe und ein CRC-Feld. Das CRC-Feld führt eine Information, die nach dem bekannten CRC-Prüfverfahren (Cyclic Redundancy Check) berechnet wurde. Dem Datenpaket wird hier die Angabe über die Länge des Datenpaketes sowie die aus der Paketlänge berechnete CRC-Prüfinformation vorangestellt. Damit ist ein Übertragungsrahmen definiert, der aus Paketlänge, CRC-Feld und dem Datenpaket selbst besteht.

Zur Synchronisierung wird in dem empfangenen Datenstrom nach einem möglichen Rahmenanfang gesucht. Hierbei wird über die empfangenden Bits eine CRC-Prüfung vorgenommen. Wird eine Sequenz gefunden, die zudem noch mit der im mitübertragenen CRC-Feld enthaltenen Sequenz übereinstimmt, wird dies als möglicher Rahmenanfang interpretiert. Zur Verifizierung dieser Interpretation wird zusätzlich überprüft, ob die dem Datenpaket vorangestellte Information als Längenangabe zu interpretieren ist. Hierzu wird diese Information auf den möglichen Rahmenanfang beaufschlagt. Wird erneut ein Rahmenanfang gefunden, wird die Synchronisierung als gelungen angenommen, ansonsten muß erneut nach einem Rahmenanfang gesucht werden. Die entsprechenden Verhältnisse werden durch das SDL (Simple Delta Link) Protokoll der Firma Lucent beschrieben.

Nachteilig an diesem Verfahren ist, daß der ankommende Bitstrom ständig einer CRC-Prüfbewertung unterworfen ist. Da die CRC-Prüfbewertungen relativ komplex sind, ist mit einer derartigen Vorgehensweise ein erhöhter Aufwand verbunden.

Der Erfindung liegt die Aufgabe zugrunde, einen Weg aufzuzeigen, wie die Grenzen von Datenpaketen variabler Länge sicher und ohne Verlust der Dynamik des Übertragungsvorganges mit einfachen Mitteln ermittelt werden können.

Die Erfindung wird ausgehend vom Oberbegriff von Patentanspruch 1 durch die im kennzeichnenden Teil angegebenen Merkmale gelöst.

Vorteilhaft an der Erfindung ist, daß jedem Datenpaket sendeseitig eine Synchronisationsinformation, eine Information bezüglich der Länge des Datenpaketes und eine über die Länge gebildete Prüfinformation vorangestellt wird. Vorteilhaft ist insbesondere, daß die CRC-Prüfbewertungen nicht wie beim Stand der Technik beim Eintreffen eines jeden Bit vorgenommen werden müssen, sondern erst, wenn eine Synchronisationsinformation gefunden wurde.

Vorteilhafte Weiterbildungen der Erfindung sind in den Unteransprüchen vorgesehen.

Der ankommende Bitstrom wird empfangsseitg auf die Synchronisationsinformation hin untersucht, und bei Auffinden derselben überprüft, ob eine empfangsseitig über die Länge gebildete Prüfinformation mit der sendeseitig gebildeten und mitübertragenen Prüfinformation übereinstimmt. Damit ist dann im Falle eines 4-stufigen Verfahrens eine vorläufige Rahmengrenze definiert. Anschließend wird bei Vorliegen dieser Übereinstimmung wenigstens einmal überprüft, ob die Beaufschlagung der vorläufigen Rahmengrenze mit der Paketlänge zur nächsten Rahmengrenze führt. Ist dies der Fall, sind endgültige Rahmengrenze und Synchronität definiert. Letztere ist dann solange gegeben, bis die Beaufschlagung dieser als endgültig angesehenen Rahmengrenze mit der Paketlänge (PL) nicht mehr zur nächsten Rahmengrenze führt.

Die Erfindung wird im folgenden anhand eines figürlich dargestellten Ausführungsbeispieles näher erläutert.

Es zeigen:
- Fig 1: eine Rahmenstruktur, über die die Paketgrenzen ermittelbar sind
- Fig 2: ein 3-stufiger Algorithmus zum Ermitteln der Paketgrenzen
- Fig 3: ein 4-stufiger Algorithmus zum Ermitteln der Paketgrenzen
- Fig 4: eine Rahmenstruktur, mit nicht aneinandergrenzenden Datenpaketen
- Fig 5: eine empfanggsseitig angeordnete Synchronisationsvorrichtung, auf der die Algorithmen nach Fig. 2, 3 ablaufen.

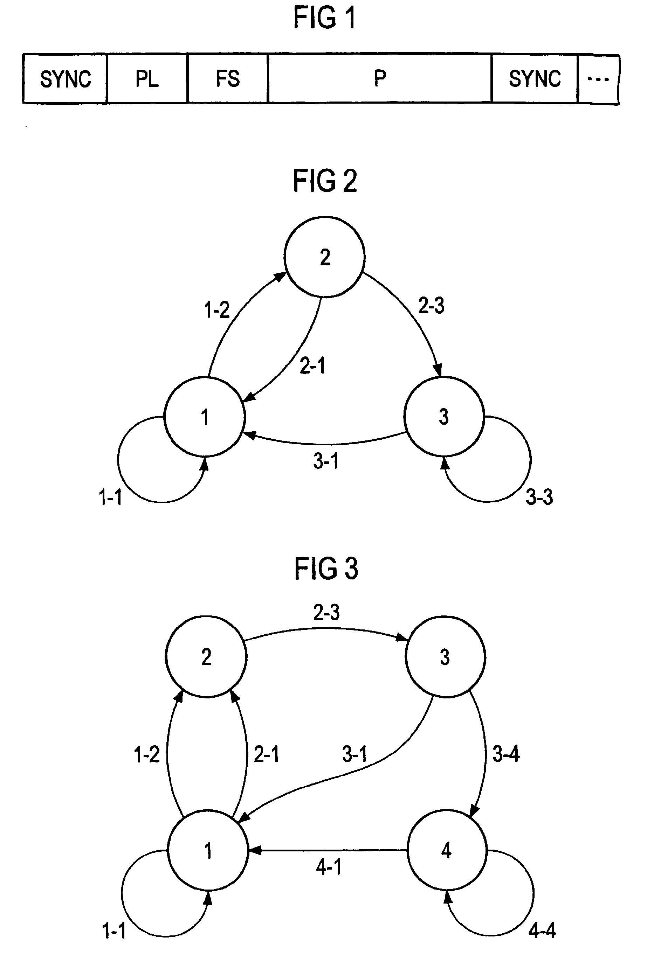

In Fig. 1 ist die erfindungsgemäße Rahmenstruktur R aufgezeigt. Demgemäß wird jedem der zu übertragenden Datenpakete P eine Startsynchronisierungssequenz SYNC, eine Angabe über die Paketlänge PL sowie eine aus dieser Angabe ermittelte Fehlersicherungssequenz FS vorangestellt. Die zu übertragenden Datenpakete P können feste oder variable Länge aufweisen.

Die Startsynchronisierungssequenz SYNC kann jede beliebe Bitfolge sein. Aus Gründen der sicheren Erkennung der Bytegrenzen und des Paketanfangs ist es aber günstiger, eine Bitfolge mit unregelmäßigen Strukturen zu wählen. Im Feld PL ist die Länge des Datenpaketes P abgelegt, d. h. hier ist ein Zeiger gespeichert, der auf die Stelle zeigt, an der das nächste Datenpaket P beginnt. Die Fehlersicherungssequenz FS ist eine aus der Paketlänge PL berechnete Prüfinformation, mit der eine Fehlererkennung oder eine Fehlerkorrektur möglich ist. Beispiele hierfür sind Blockcodes, CRC- (Cyclic Redundancy Check), BIP- (Bit Interleaved Parity) oder FEC- (Forward Error Correction) Prüfverfahren. Die einzelnen Rahmen R sind nahtlos aneinandergereiht, wobei auch Leerrahmen (Datenpaketlänge PL = 0) möglich sind. Es werden also stets Rahmen, bestehend aus den Feldern SYNC, PL, FS sowie optional auch ein Datenpaket P (Datenpaketlänge > 0) übertragen.

Die Rahmen R können auch weitere Felder mit speziellen Funktionen enthalten sein. Diese werden aber für die Synchronisierung nicht verwendet. Solche Felder könnten sich wahlweise vor oder nach dem Datenpaket befinden (z.B. CRC-Check über das Datenpaket).

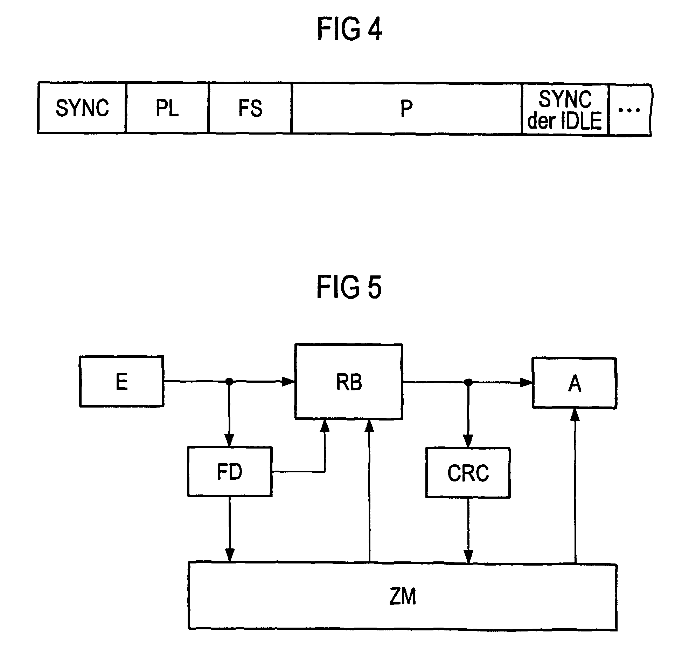

Die Startsynchronisierungssequenz SYNC ermöglicht ein einfaches Auffinden möglicher Byte- und Rahmengrenzen. Anhand der Fehlersicherungssequenz FS ist eine weitere Überprüfung daraufhin möglich, ob es sich um einen Rahmenanfang handelt oder nicht. Zur Synchronisierung auf die Byte- und Paketgrenzen gibt es damit die in Fig. 3 und Fig. 4 aufgezeigten Möglichkeiten:

In Fig. 3 ist ein 3-stufiges Verfahren aufgezeigt, wie Byte- und Paketgrenzen mit Hilfe der Felder SYNC, PL, FS empfangsseitg ermittelt werden können. Das Diagramm zeigt insgesammt 3 Zustände, nämlich Zustand 1, Zustand 2, Zustand 3. Zwischen allen 3 Zuständen gibt es Zustandsübergänge. Jeder Zustand und jeder Zustandsübergang definiert ein bestimmtes Systemverhalten.

Es bedeuten:
Zustand 1: Byte- und Rahmengrenzen sind nicht bekannt. Der Empfänger ist ausgerastet. Im empfangenen Bitstrom wird nach der Startsynchronisationssequenz SYNC gesucht.
Zustand 2: Eine Startsynchronisierungssequenz SYNC (d.h. möglicher Rahmenanfang) wurde gefunden.
Zustand 3: Der Empfänger ist eingerastet (Synchronisiert). Anhand der Paketlänge PL ist die Stelle des nächsten Rahmenanfangs bekannt.

Für die Zustandsübergänge gilt:
Zustandsübergang 1-1: Es wurde keine Startsynchronisierungssequenz SYNC gefunden.
Zustandsübergang 1-2: Es wurde eine gültige Startsynchronisierungssequenz SYNC gefunden.
Zustandsübergang 2-1: Die der Startsynchronisierungssequenz SYNC folgende Fehlersicherungssequenz FS war ungültig.
Zustandsübergang 2-3: Die der Startsynchronisierungssequenz SYNC folgende Fehlersicherungssequenz FS war gültig.
Zustandsübergang 3-1: An der erwarteten Stelle wurde kein gültiger Rahmenanfang gefunden.
Zustandsübergang 3-3: An der erwarteten Stelle wurde ein gültiger Rahmenanfang gefunden.

Hierbei ist unter einer gültige Startsynchronisierungssequenz zu verstehen, daß eine bestimmte Anzahl korrekter Bits gefunden worden ist. Das Kriterium für eine "gültige Startsynchronisierungssequenz" kann für die einzelnen Zustände auch unterschiedlich gewählt werden. Sinnvoll für den Zustandsübergang 1-2 ist allerdings, wenn für den Übergang erforderlich ist, daß sämtliche Bits korrekt sind. Für den Übergang 3-1 ist es dagegen sinnvoll, nicht bei jedem einzelnen Bitfehler neu zu synchronisieren. Hier sollte dann eine bestimmte Anzahl an Bitfehler erlaubt sein. Im Fall einer gültigen Fehlersicherungssequenz sind zwei Forderungen denkbar:
1) die Fehlersicherungssequenz ist vollkommen korrekt oder
2) im Falle, daß ein Algorithmus verwendet wird, der eine Fehlerkorrektur erlaubt: Die Fehlersicherungssequenz stimmt nicht vollkommen fehlerfrei, die Anzahl der Fehler erlaubt aber noch eine Fehlerkorrektur. Die richtige Paketlänge kann also dennoch bestimmt werden. Punkt 1) und 2) können für die Zustände 2 und 3 unabhängig voneinander gewählt werden. So ist es z.B. sinnvoll die Fehlerkorrektur erst im Zustand 3 zu verwenden und nicht im Zustand 2, wo die Wahrscheinlichkeit eines irrtümlich angenommenen Rahmenanfangs noch relativ hoch ist.

Unter einem gültigen Rahmenanfang ist eine gültige Fehlersicherungssequenz zu verstehen oder eine Kombination einer gültigen Fehlersicherungssequenz und einer gültigen Startsynchronisierungssequenz.Das alleinige Überprüfen der Startsynchronisierungssequenz ist nicht sinnvoll, da eine korrekte Paketlänge zum Finden des nächsten Paketanfangs notwendig ist.

Fig. 4 zeigt ein 4-stufiges Verfahren. Während bei dem 3-stufigen Verfahren eine gewisse Fehlerwahrscheinlichkeit besteht, wird hier der letzte Verfahrensschritt des 3-stufigen Verfahrens, nämlich das Auffinden der nächsten Paketgrenze wiederholt. In einer speziellen Ausgestaltung der Erfindung wird vorgesehen, diesen letzten Verfahrensschritt des 3-stufigen Verfahrens mehrmals vorzunehmen.

Die Zustände 1, 2 sind hier identisch mit den Zuständen 1, 2 des 3-stufigen Verfahrens. Zu dem neuen Zustand 3 kommt nun noch ein neuer Zustand 4 hinzu.

Zustand 3: Der Empfänger ist vorgerastet (pre-synchronisiert). Anhand der Paketlänge ist die Stelle des nächsten Rahmenanfangs bekannt.

Zustand 4: Der Empfänger ist eingerastet (synchronisiert). Anhand der Paketlänge ist die Stelle des nächsten Rahmenanfangs bekannt.

Die einzelnen Zustandsübergänge bedeuten:
Zustandsübergang 1-1: Es wurde keine Startsynchronisierungssequenz SYNC gefunden.
Zustandsübergang 1-2: Es wurde eine gültige Startsynchronisierungssequenz SYNC gefunden.
Zustandsübergang 2-1: Die der Startsynchronisierungssequenz SYNC folgende Fehlersicherungssequenz FS war ungültig.
Zustandsübergang 2-3: Die der Startsynchronisierungssequenz SYNC folgende Fehlersicherungssequenz FS war gültig.
Zustandsübergang 3-1: An der erwarteten Stelle wurde kein gültiger Rahmenanfang gefunden.
Zustandsübergang 3-4: An der erwarteten Stelle wurde ein gültiger Rahmenanfang gefunden.
Zustandsübergang 4-1:An der erwarteten Stelle wurde kein gültiger Rahmenanfang gefunden.
Zustandsübergang 4-4: An der erwarteten Stelle wurde ein gültiger Rahmenanfang gefunden.

Die Begriffe "gültige Startsynchronisierungssequenz" und "gültigen Fehlersicherungssequenz" sind wie im 3-stufigen Verfahren definiert. Für die Zustände 3 und 4 unterscheidet sich die Bedingungen. Dies bedeutet, daß unterschiedliche Kriterien gewählt wurden. Sinnvoll ist es die Bedingung im Zustand 3 härter zu wählen, da man in den Zustand 4 nicht fälschlicherweise gelangen möchte. Zum Beispiel: Die Fehlersicherungssequenz muß vollkommen korrekt sein; die Fehlerkorrektur wird nicht verwendet. Weiter kann auch noch verlangt werden, daß die StartsynchronisierungssequenzSYNC korrekt empfangen wurde. Im Zustand 4 dagegen würde man nur die Fehlersicherungssequenz mit Fehlerkorrektur verwenden, da man ja nun sehr sicher ist, daß man auf den tatsächlichen Rahmenanfang synchronisiert hat.

Die Vorrichtungen, auf denen das erfindungsgemäße Verfahren zum Ablauf gelangt, können auch als parallel arbeitende Synchronisationsvorrichtungen ausgebildet sein. Alle Synchronisationsvorrichtungen können nach dem 3 - oder 4 - stufigen Verfahren arbeiten.

Die Bedingungen für den Zustandsübergang 1-2 sowie den Zustandsübergang 1-1 müssen dann dahingehend koordiniert werden, daß nur eine der Synchronisationsvorrichtungen beim Auftreten einer Startsynchronisierungssequenz SYNC vom Zustand 1 in 2 übergeht. Andernfalls würden mehrere Synchronisationsvorrichtungen denselben möglichen Rahmenanfang überprüfen.

Zustandsübergang 1-1: Es wurde keine Startsynchronisierungssequenz SYNC gefunden oder die Synchronisationsvorrichtung ist nicht an der Reihe.

Zustandsübergang 1-2: Es wurde eine gültige Startsynchronisierungssequenz SYNC gefunden und die Synchronisationsvorrichtung ist an der Reihe.

Eine übergeordnete Steuerung koordiniert die verschiedenen Synchronisationsvorrichtungen. Die Steuerung wählt aus den Synchronisationsvorrichtungen, die sich im Zustand 1 befinden eine aus, die an der Reihe ist, falls die nächste Startsynchronisierungssequenz SYNC empfangen wird. Gelangt eine Synchronisationsvorrichtung in den Zustand 4, so wird deren gefundener Rahmenanfang als der gültige genommen und gehalten bis diese Synchronisationsvorrichtung wieder in den Zustand 1 zurückfällt, also die Synchronisation verliert.Optional kann schon, wenn die erste Synchronisationsvorrichtung in den Zustand 2 oder 3 gelangt, dieser Rahmenanfang als der gültige angenommen werden, allerdings nur solange bis eine der übrigen Synchronisationsvorrichtung in den Zustand 4 gelangt.

Bislang wurde davon ausgegangen, daß die Pakete nahtlos aneinandergereiht sind. In einer in Fig. 4 aufgezeigten Ausgestaltung der Erfindung wird nun davon ausgegangen, daß dies nicht unbedingt der Fall sein muß. Somit können auch bestimmte Idle-Sequenzen zum Kennzeichnen, zum Auffüllen der Lücken zwischen den Paketen verwendet werden. Jedem zu übertragenen Datenpaket P wird die Startsynchronisationssequenz SYNC, die Paketlängenangabe PL sowie die daraus ermittelte Fehlersicherungssequenz FS vorangestellt.

Die einzelnen Datenpakete P können nahtlos aneinandergereiht werden, wobei auch Leerpakete (Datenpaketlänge = 0) möglich sind. Es werden also immer Sequenzen SYNC, PL, FS und optional auch ein Datenpaket P übertragen. Außerdem dürfen zwischen den Datenpaketen P bestimmte Idle-Sequenzen eingefügt werden, die sich allerdings von der Startsynchronisationssequenz SYNC unterscheiden sollten. Außerdem sollten Sie nicht als gültige Paketlänge aufgrund eines durchgeführten FS-Prüfverfahrens interpretiert werden können.

Die in Fig. 2, Fig. 3 angeführten Zustandsdiagramme funktionieren auch dann, wenn das IDLE-Muster so gewählt ist, daß keine korrekte Paketlänge PL vorgetäuscht wird.

In Fig 5 ist eine empfangsseitige Synchronisationsvorrichtung in Form eines Blockschaltbildes aufgezeigt. Demgemäß werden die Datenpakete P von einer eingangsseitg angeordneten Einrichtung E (Eingang) aufgenommen. Die Aufnahme erfolgt bitorientiert, d.h. Byte und Rahmengrenzen sind noch nicht bekannt. Die einzelnen Bits werden einer Einrichtung FD (Flag-Detektion) und einer Einrichtung RB (Rahmenbildung) zugeführt.
In der Einrichtung FD wird der ankommende Bitstrom auf das Auftreten der Startsynchronisationssequenzen SYNC hin untersucht. Wird eine Startsynchronisationssequenz SYNC ermittelt, wird dies der Einrichtung RB und einer übergeordneten Steuervorrichtung ZM (Zustandsmaschine) mitgeteilt.

Die Einrichtung RB erhält den bit-orientierten Datenstrom von der Einrichtung E. Außerdem werden von der Einrichtung FD Informationen über den Rahmenanfang mitgeteilt, falls eine Startsynchronisationssequenz SYNC gefunden wurde. Ferner erhält sie von der Steuervorrichtung ZM eine Information darüber, ob die die Information bezüglich des Rahmenanfangs übernommen oder aber der aktuelle Zustand beibehalten werden soll. Am Ausgang der Einrichtung RB liegen rahmenorientierte Daten an.

Als Fehlersicherungssequenz wird ein CRC-Prüfverfahren verwendet. Diese gelangt in einer Einrichtung CRC zum Ablauf. Die Einrichtung CRC erhält rahmenorientierte Daten von der Einrichtung RB, berechnet eine CRC-Prüfsumme über die Paketlänge PL neu und vergleicht das Resultat mit der empfangenen, mitübertragenen CRC-Prüfsumme. Das Ergebnis dieses Vergleichs wird der Steuervorrichtung ZM mitgeteilt.

Ausgangsseitig ist eine Einrichtung A angeordnet.Diese erhält einen rahmenorientierten Datenstrom von der Einrichtung RB. Hier wird im folgenden nun das eigentliche Datenpaket P extrahiert und dann weitergeleitet, wenn das Signal von der Steuervorrichtung ZM dies erlaubt. Dieses von der Steuervorrichtung ZM gelieferte Signal teilt der Einrichtung A mit, ob das Datenpaket P zu verwerfen ist oder nicht.

Die übergeordnete Steuerung dieser Vorgänge wird von der Steuervorrichtung ZM übernommen. Die Steuervorrichtung ZM erhält eine Information von der Einrichtung FD, ob eine Startsynchronisationssequenz SYNC gefunden worden ist. Außerdem erhält sie das Ergebnis des CRC-Prüfverfahrens. Die Steuervorrichtung ZM arbeitet z.B. nach dem in Fig. 2 oder Fig. 3 aufgezeigten Zustandsdiagramm ohne CRC-Korrektur. Ausgehend vom Zustand 1 geht sie in Zustand 2 über, wenn eine Startsynchronisationssequenz SYNC gefunden wurde.

Im Zustand 1 wird der Einrichtung RB mitgeteilt, daß die Information bezüglich des Rahmenanfangs von der Einrichtung FD zu übernehmen ist. Außerdem sollen Datenpakete P von der Einrichtung A verworfen werden. Vom Zustand 2 geht sie in Zustand 3 über, falls das CRC-Prüfverfahren erfolgreich war. Ansonsten fällt sie in Zustand 1 zurück. Im Zustand 2 werden die Datenpakete P in der Einrichtung A verworfen. Rahmenanfang-Informationen von der "Flag-Detektion werden in diesem Fall von der Einrichtung RB nicht übernommen. Im Zustand 3 werden die Datenpakete P von der Einrichtung A nicht mehr verworfen. Rahmenanfang-Informationen von der Einrichtung FD werden nicht übernommen von der Einrichtung RB. Übergang in Zustand 1 falls der CRC-Check ein negatives Ergebnis liefert.

Bei der vorliegenden Erfindung wurden zwei bekannte Verfahren miteinander kombiniert, so daß das erfindungsgemäße Verfahren die Vorteile der beiden oben genannten herkömmlichen Verfahren beibehält, aber deren Nachteile vermeidet. Die Verwendung einer Startsynchronisationssequenz begünstigt ein einfaches, schnelles Auffinden der Bytegrenzen und der Rahmen - bzw. Paketgrenzen. Durch das Berücksichtigen der Paketlänge sind trotz der Verwendung einer Startsynchronisationssequenz alle Bitfolgen innerhalb des Pakets erlaubt. Es müssen keine Bitfolgen durch längere Sequenzen ersetzt werden. In diesem Fall könnte die Paketlänge abhängig von ihrem Inhalt bis zu einem Faktor zwei anwachsen.

## Patentansprüche

1. Verfahren zur Synchronisierung von Datenpaketen variabler Länge in einem bit-orientierten Kanal, mit
einer Mehrzahl von Datenpaketen (P), die zwischen einer sendenden und empfangenden Einrichtung übertragen werden,
d**adurch gekennzeichnet**,
daß jedem Datenpaket (P) sendeseitig eine Synchronisationsinformation (SYNC), eine Information bezüglich der Länge (PL) des Datenpaketes (P) und eine über die Länge gebildete Prüfinformation (FS) vorangestellt wird.

2. Verfahren nach Anspruch 1,
**dadurch gekennzeichnet,**
daß der ankommende Bitstrom empfangsseitg auf die Synchronisationsinformation (SYNC) hin untersucht wird (1),
daß bei Auffinden einer Synchronisationsinformation (SYNC) überprüft wird (2), ob eine empfangsseitig über die Länge (PL) gebildete Prüfinformation (FS) mit der sendeseitig gebildeten und mitübertragenen Prüfinformation (FS) übereinstimmt,
daß bei Vorliegen dieser Übereinstimmung (3) eine Rahmengrenze und eine Synchronität definiert ist, und die Synchronität solange gegeben ist, bis die Beaufschlagung der Rahmengrenze mit der Paketlänge (PL) nicht mehr zur nächsten Rahmengrenze führt.

3. Verfahren nach Anspruch 1,
**dadurch gekennzeichnet**,
daß der ankommende Bitstrom empfangsseitg auf die Synchronisationsinformation (SYNC) hin untersucht wird (1),
daß bei Auffinden einer Synchronisationsinformation (SYNC) überprüft wird (2), ob eine empfangsseitig über die Länge (PL) gebildete Prüfinformation (FS) mit der sendeseitig gebildeten und mitübertragenen Prüfinformation (FS) übereinstimmt,
daß bei Vorliegen dieser Übereinstimmung (3) eine vorläufige Rahmengrenze definiert ist, die wenigstens einmal durch die Beaufschlagung dieser vorläufigen Rahmengrenze mit der Paketlänge (PL) überprüft wird (4), und
daß erst bei Vorliegen dieser Übereinstimmung die vorläufige Rahmengrenze als endgültig sowie eine Synchronität definiert ist, und die Synchronität solange gegeben ist, bis die Beaufschlagung dieser als endgültig angesehenen Rahmengrenze mit der Paketlänge (PL) nicht mehr zur nächsten Rahmengrenze führt.

4. Verfahren nach Anspruch 1, bis 3,
**dadurch gekennzeichnet**,
daß die Prüfinformation (FS) ein CRC-Prüfverfahren ist.

5. Verfahren nach Anspruch 1 bis 3,
**dadurch gekennzeichnet**,
daß die Prüfinformation (FS) ein BIP-Prüfverfahren ist.

6. Verfahren nach Anspruch 1 bis 3,
**dadurch gekennzeichnet**,
die Prüfinformation (FS) ein FEC-Prüfverfahren ist.

7. Verfahren nach einem der vorstehenden Ansprüche,
**dadurch gekennzeichnet,**
daß eine Mehrzahl von parallel arbeitenden Synchronisationsvorrichtungen vorgesehen ist, die von einer übergeordneten Steuerung koordiniert werden.

8. Verfahren nach einem der vorstehenden Ansprüche,
**dadurch gekennzeichnet,**
daß Idle-Sequenzen zum Kennzeichnen und/ oder Auffüllen der Lücken zwischen den Datenpaketen (P) verwendet werden.

9. Verfahren nach einem der vorstehenden Ansprüche,
**dadurch gekennzeichnet**,
daß eine zustandsabhängige Variation der Kriterien für die Zustandsübergänge (z.B. 1-2, 2-3) durchgeführt wird.

10. Verfahren nach einem der vorstehenden Ansprüche,
**dadurch gekennzeichnet,**
daß die sendenden und empfangenden Einrichtungen als Router-Einrichtungen ausgebildet sind.
